# EUROPEAN PATENT APPLICATION

(11) **EP 1 077 546 A1**
(43) Date of publication of application: **21.02.2001**
(21) Application number: 99306449.2
(22) Date of filing: 17.08.1999
(51) Int. Cl.: H04B 17/00

(54) **Process and apparatus for the automatic detection of a faulty cabling in radio communication equipments**

(71) Applicant: LUCENT TECHNOLOGIES INC., Murray Hill, New Jersey 07974-0636 (US)
(72) Inventor: Fischer, Georg, Nurnberg, 90419 (DE); Schmitt, Kai, Nurnberg, 90491 (DE)
(74) Representative: Williams, David John

(57) **Abstract**

The invention relates to a process for the automatic detection of the allocation of at least one transmitting device and/or receiving device to a transmitting and/or receiving antenna of a radio communication equipment, which has at least one transmitting device and/or receiving device (1, 2..m₁, 1, 2..m₂, 1, 2..mₙ) and at least one transmitting and/or receiving antenna (70₁, 70₂..70ₙ; 75₁, 75₂..75ₙ).

For this purpose, at least one transmitting device and/or receiving device is first allocated to each transmitting antenna and/or receiving antenna. A predetermined transmitting device and/or receiving device is then activated, and a signal or noise is fed into the radio communication equipment. The signal or noise is evaluated in at least one detector device (1, 2..m₁, 1, 2..m₂, 1, 2..mₙ; 50₁, 50₂..50ₙ), which is arranged at a predetermined place of the radio communication equipment. An allocation of the activated transmitting device and/or receiving device to one of the transmitting antennas and/or receiving antennas is ascertained in dependence on the evaluated signal or noise level.

## Description

The invention relates to a process for the automatic detection of the allocation of at least one transmitting and/or receiving device to a transmitting and/or receiving antenna of a radio communication equipment which has several transmitting and/or receiving devices and several transmitting and/or receiving antennas. The invention furthermore relates to an apparatus for carrying out the process according to the invention.

In larger radio communication equipments, several transmitters are usually allocated to a common antenna, i.e., signals of different transmitters are radiated from a common antenna. In the same way, several receivers can be allocated to a receiving antenna. The problem frequently arises in this case that errors in the cabling can occur, depending on the large number of transmitters, receivers, and antennas.

The invention therefore has as its object to provide a process and an apparatus with which an automatic detection of a faulty cabling is possible in radio communication equipments.

This technical problem is firstly solved by the process steps of claim 1. For this purpose, each transmitting and/or receiving antenna is first connected to at least one transmitting or receiving device. Those transmitting and/or receiving devices whose cabling is to be investigated are then activated. For testing for an erroneous connection, a predetermined signal or noise is fed into the radio communication equipment. The signal or noise which is fed in is evaluated with respect to its power level in at least one detector device which is arranged at a predetermined place within the radio communication equipment. An allocation of the activated transmitting and/or receiving device to one of the transmitting and/or receiving antennas can be established by means of the evaluated signal or noise level. A programmable evaluation device is capable of indicating a correct or faulty cabling of the activated transmitting and/or receiving device, based on the allocation which is established.

Advantageous embodiments are the subject of the dependent claims.

The process according to the invention is repeated for each transmitting device and/or receiving device. Thus an automatic detection of the allocation is insured for the whole radio communication equipment.

In a separate embodiment, a cabling of transmitting devices with transmitting antennas can be tested, in that a power detector is allocated to each transmitting antenna. A predetermined transmitting device is first activated and produces a transmitting signal. An allocation of the transmitting device to a transmitting antenna is ascertained in that a power detector detects a predetermined transmission power. The transmitting antenna allocated to this power detector is then connected to the activated transmitting device. An advantage of this method is that conventionally used antenna monitoring circuits can be used in conjunction as power detectors.

In order to be able to detect an allocation of the activated transmitter device to a transmitting antenna, the measurement results of the power detectors can be simultaneously or successively interrogated and evaluated by an evaluation device. If the measurement results are interrogated successively, the allocation process can be immediately ended when a power detector has received a signal with a predetermined transmission power.

In a further embodiment, a receiving device is allocated to each transmitting device so that the allocation of at least one receiving device to a receiving antenna can be established on an alternative solution path. Again, a predetermined transmitting device is first activated, and consequently emits a transmission signal with a predetermined frequency. The transmission frequency is appropriately tuned to the receiving frequency of the receiving devices. The signal level of the transmission signal is then measured in each receiving device. The allocation of the activated transmitting device to a transmitting antenna can then be determined from the measured signal levels.

Several transmitting devices are usually allocated in a group to each transmitting antenna. In this case it is possible to determine from the measured signal levels the allocation of the activated transmitting devices to the corresponding group and to the transmitting antenna allocated to this group, based on the known coupling attenuation between the receiving devices of one group and the receiving devices of different groups.

In a further separate embodiment, the allocation of a receiving device to a receiving antenna can be determined. For this purpose, a controllable amplifier and at least one receiving device are allocated to each receiving antenna. A receiving signal or noise is fed via each receiving antenna to the corresponding controllable amplifier, and is respectively switched on and off for a predetermined period. Each receiving device determines the difference of the signal level or noise level with the amplifier switched on and switched off, so that the allocation of a receiving device to the corresponding receiving antenna can be determined.

In order to prevent disturbances due to interfering signals at the input of the receiving devices, the allocation procedure can be repeated with received signals of different frequencies. Alternatively, the controllable amplifier devices can be switched on and off in a sequence which is defined in time.

The technical problem is likewise solved by the apparatus described in claim 11, for the automatic detection of the allocation of at least one transmitting device and/or receiving device to a transmitting antenna and/or receiving antenna of a radio communication equipment.

At least one transmitting device and/or receiving device is allocated to each transmitting and/or receiving antenna, so that a detector for sensing a predetermined signal level or noise level of a signal fed into the radio communication equipment is allocated to each transmitting device and/or receiving device. Furthermore a control device for activating a predetermined transmitting device and/or receiving device, and an evaluation device connected to the detectors, are provided for determining, from the evaluated signal level or noise level, the allocation of the driven transmitting device and/or receiving device to one of the transmitting antennas and/or receiving antennas.

According to an embodiment, a detector for measuring the signal power is allocated to each transmitting antenna. The control device is in this case constituted to activate each transmitting device which, on responding thereto, respectively produces a transmission signal.

The usual combiners serve for the combination of several transmitting devices and/or receiving devices in groups.

Advantageous developments are the subject of the dependent claims.

The invention, with its features and advantages, is best understood from the following description, with reference to the accompanying drawings. In the drawings, the same reference symbols are used for the same or similar elements.
- Fig. 1: shows a schematic representation of a radio communication equipment for the automatic detection of the allocation of at least one transmitting device to a transmitting antenna;
- Fig. 2: shows a schematic representation of an alternative radio communication equipment for the automatic detection of the allocation of at least one transmitting device to a transmitting antenna;
- Fig. 3: shows a schematic representation of a radio communication equipment for the automatic detection of the allocation of at least one receiving device to a receiving antenna.

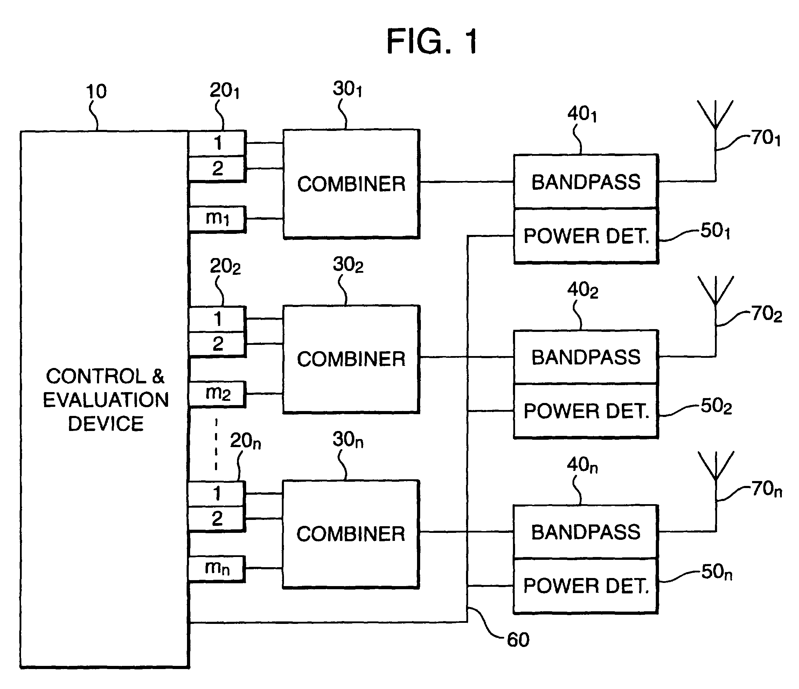

For the sake of simplicity, Fig. 1 shows only the transmitting section of a radio communication equipment, which includes several transmitting devices, termed transmitters for short, combined together in groups. For example, the first group 20₁ includes the transmitters 1-m₁, the second group 20₂ includes the transmitters 1-m₂, and the group 20ₙ includes the transmitters 1-mₙ. All the transmitters are connected to a control and evaluation device 10, whose function will be described in detail hereinbelow. Furthermore each group of transmitters is connected to a separate combiner 30₁, 30₂ and 30ₙ. On the output side, each combiner 30₁, 30₂ and 30ₙ is connected via a separate transmission bandpass 40₁, 40₂, or 40ₙ, known per se, to a transmitting antenna 70₁, 70₂ or 70ₙ. Furthermore, a HF power detector 50₁, 50₂, or 50ₙ, respectively, is allocated to each transmission bandpass 40₁, 40₂ or 40ₙ, and is further connected via a bus lead to the control and evaluation device 10. Each HF power detector can be implemented in the respective transmission bandpass, constituted as a separate component, or can be a portion of a conventional antenna monitoring circuit.

The operation of the radio communication equipment according to Fig. 1 for detecting the allocation of a transmitter to a transmitting antenna or for ascertaining a faulty cabling between the transmitters and the transmitting antennas will next be described in more detail. The process described hereinbelow will appropriately be carried out before the radio communication equipment is placed in service.

Firstly, for example, the transmitter of the group 20₁ is activated by the control and evaluation device 10, whereupon the transmitter 1 emits a transmission signal. Thereafter the HF power detectors 50₁, 50₂, 50ₙ are simultaneously or sequentially interrogated by the control and evaluation device 10, in order to ascertain which of the HF power detectors has measured a predetermined transmitter power. For example, the control and evaluation device 10 has detected that the HF power detector 50₁ signaled that it has measured a predetermined transmitter power. Consequently the control and evaluation device 10 "knows" that the transmitter 1 of the group 20₁ is connected to the transmitting antenna 70₁. Thus no cabling error is present. This state can be signaled to an operator acoustically and/or optically. In a similar manner, the correct allocation of the rest of the transmitters to one of the transmitting antennas can be determined in time succession.

This automated process is particularly distinguished by its simple measurement method and by its rapid detection of cabling faults. The HF power detectors only have to determine whether a predetermined threshold value has been reached and/or exceeded. An exact power measurement is not required. The threshold value only has to take account of all the error tolerances of the respective transmitter and HF power detector. This furthermore means that high accuracy does not have to be imposed on the transmission signal delivered by the respective transmitter. In order to minimize a possible radiation from the transmitter antennas in test operation, it offers, not only as small a transmitter power as possible, but also the use of transmission frequencies which lie in the rejection band of the respective transmitter bandpass. This the transmission signal required to carry out the process can be sufficiently attenuated. Here reflections do indeed arise at the respective transmission bypass, but can be taken into account in a short time up to the end of the evaluation.

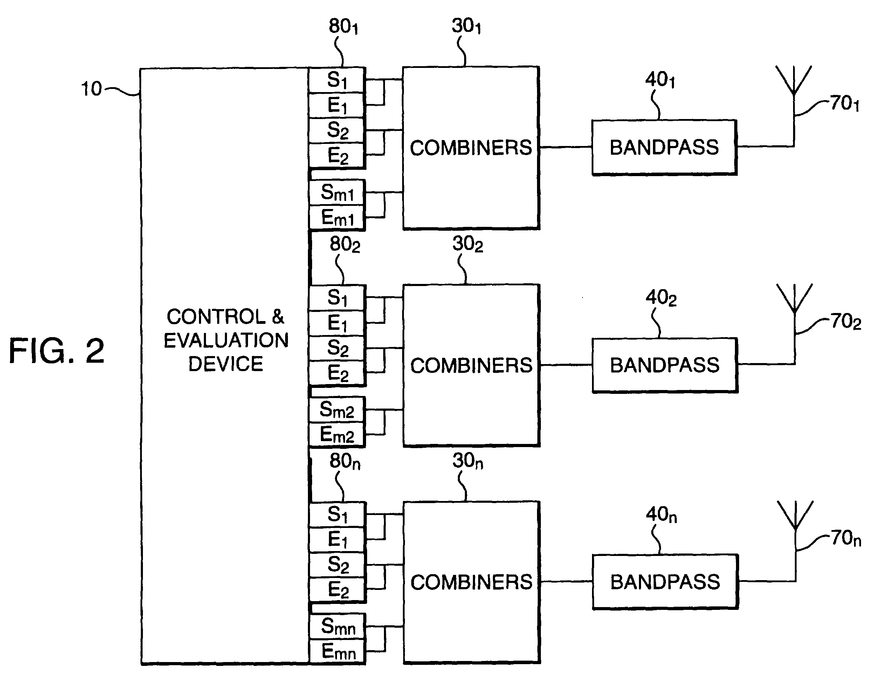

Fig. 2 shows an alternative radio communication equipment, with which the correct or faulty allocation of a transmitter to a transmission antenna can be determined and signaled. The radio communication equipment includes several transmitters which are in groups, and to each of which a receiver is allocated. This combination of transmitter and receiver is denoted hereinbelow by the abbreviation transmitter/receiver. For example, the first group 80₁ includes the transmitter/receiver 1-m₁, the second group 80₂ the transmitter/receiver 1-m₂, and the group 80ₙ the transmitter/receiver 1-mₙ. All the transmitter/receivers are connected to control and evaluation device 10, the function of which is described in further detail hereinbelow. Furthermore, each group of transmitters is connected to a separate combiner 30₁, 30₂ and 30ₙ. On the output side, each combiner 30₁, 30₂ and 30ₙ is connected via a separate, known per se, transmission bypass 40₁, 40₂ and 40ₙ, with a transmitting antenna 70₁, 70₂, or 70ₙ.

In order to be able to detect faulty cablings or allocations between the transmitters and the transmitting antennas, the transmitters are implemented such that in test operation they use transmission frequencies which correspond to the receiving frequencies of the receiver allocated to them. The transmission frequencies in test operation do not, however, correspond to the transmission frequencies in transmitting operation of the radio communication equipment. In other words, each transmitter must be able to be switched between two transmission frequencies. The control and evaluation device takes over the switching over between the different transmission frequencies. The use of different transmission frequencies for the transmission operation and test operation has the advantage that desirably in test operation the radiation emitted at the respective transmitting antenna is strongly reduced by the respective transmission bandpass. The transmission frequency of the transmitter for test operation is preferably situated in the rejection band of the respective transmission bandpass.

The mode of operation of the radio communication equipment shown in Fig. 2 is described in detail hereinbelow.

With the radio communication equipment shown in Fig. 2, it is possible to detect an allocation of the transmitter to the groups and to the transmitting antennas, on account of the different coupling attenuation c_{K} in the combiners and the coupling attenuations c_{A} between different transmitting antennas. For example, the coupling attenuation c_{K} is 25 dB and the coupling attenuation c_{A} is 20-30 dB. The attenuation between the input and output of a combiner is 6 dB, for example.

In a specific example, the control and evaluation device 10 first switches the supposed group 80₁ into test operation. The transmitter 1 then transmits a transmission signal with the corresponding frequency, which is not the transmission frequency proper, and the receivers of all transmitter/receivers are ready to receive this transmission signal. On account of the different attenuations, the transmission signal between the transmitter/receivers connected to the same combiner are attenuated by about 25 dB, and between transmitter/receivers of different groups, is attenuated by about 30 dB. In order to increase this difference in level, and thus the evaluation quality of the control and evaluation device 10, the transmission frequency used in test operation can be additionally attenuated by a predetermined attenuating factor in the rejection band of the respective transmission bandpass. Each receiver passes on the detected signal level to the control and evaluation device 10, which detects the allocation of the transmitter 1 to a group and to a transmitting antenna from the passed-on receiving levels, and which can signal to an operator. For example, the receivers of the transmitter/receivers 2 through mₙ of the group 80ₙ detect a signal level attenuated by 25 dB, while all the other receivers have measured a signal level attenuated by about 30 dB. The control and evaluation device 10 detects from these values that the transmitter 1 of the supposed group 80₁ has been erroneously interchanged with the transmitter 1 of the supposed group 80ₙ, and has actually been connected to the transmitting antenna 70ₙ. The test operation is then repeated in time sequence for the other transmitters. At the end of the test operation, the actual cabling of the transmitters and transmitting antennas is known in the control and evaluation device.

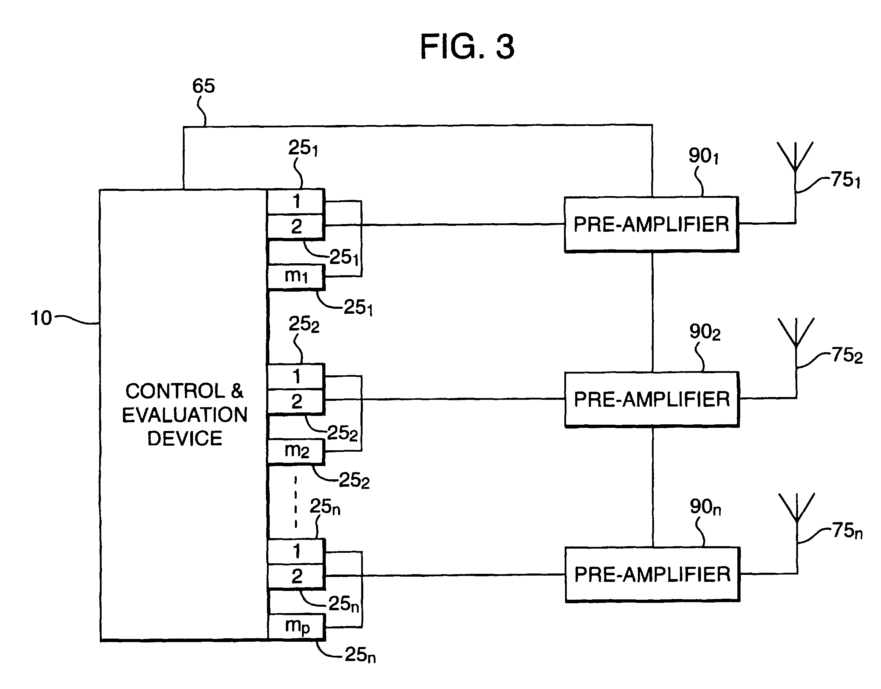

For the sake of simplicity, Fig. 3 shows only the receiving section of a radio communication equipment which includes several receiving devices, called receivers for short, which are combined together in groups. For example, the first group 25₁ includes the receivers 1-m₁, the second group 25₂ includes the receivers 1-m₂, and the group 25ₙ includes the receivers 1-mₙ. All receivers are connected to a control and evaluation device 10, the operation of which will be described in detail hereinbelow. Each group of receivers is connected via controllable amplifiers to a receiving antenna. For example, the group 25₁ is connected via a preamplifier 90₁ to a receiving antenna 75₁, the group 25₂ is connected via a preamplifier 90₂ to a receiving antenna 75₂, and the group 25ₙ is connected via a preamplifier 90ₙ to a receiving antenna 75ₙ. The controllable amplifiers are likewise connected to the control and evaluation device 10, which can switch the amplification in the amplifiers on and off.

The mode of operation of the radio communication equipment shown in Fig. 3, for detecting faulty cabling between the receivers ant the receiving antennas, is described in detail hereinbelow.

Firstly, let it be assumed that a receiving signal is received with a predetermined receiving level by the receiving antennas, and that the amplifiers 90₂ and 90ₙ are switched off and the amplifier 90₁ is switched on. Next, all the receivers are activated, in order to find out which receiver(s) is/are allocated to the receiving antenna 75₁. Firstly, all the receivers pass on the measured level of the received signal to the control and evaluation device 10. The amplifier 90₁ is then also switched off and a level measurement is again carried out in the receivers. The measured level values are again fed to the control and evaluation device 10. The control and evaluation device 10 now compares the receiving level for each receiver, measured with the amplifier 90₁ switched on and switched off, and outputs the measured level differences in dB. The receiver(s) for which a predetermined level difference was determined is/are then connected to the receiving antenna 75₁. For example, the evaluation of the control and evaluation device determines that the receivers 1 and 2 of the group 25₁ and the receiver 2 of the group 25ₙ have measured the predetermined level difference with the amplifier 90₁ switched on and off. This means that these three receivers have been connected to the receiving antenna 75₁. According to Fig. 3, a cabling error is therefore present, since according to the cabling plan, which can be stored in the control and evaluation device 10, the receiver 2 of the group 25ₙ should be connected to the receiving antenna 25ₙ.

The rest of the amplifiers 90₂ through 90ₙ are switched on and off in sequence, in order to determine the complete allocation of the receivers to the receiving antennas. Instead of evaluating an external receiving signal, the noise level within each signal path of the radio communication equipment can also be used to ascertain a correct cabling between the receivers and the receiving antennas.

## Claims

1. Process for the automatic detection of the allocation of at least one receiving device and/or transmitting device to a transmitting antenna and/or receiving antenna of a radio communication equipment, which has at least one transmitting device and/or receiving device and at least one transmitting antenna and/or receiving antenna, with the following process steps:
(a) at least one transmitting device and/or receiving device is allocated to each transmitting antenna and/ or receiving antenna;
(b) a predetermined transmitting device and/or receiving device is activated;
(c) feeding in of a signal or of noise into the radio communication equipment;
(d) evaluation of the signal or noise level in at least one detector device which is arranged at a predetermined place of the radio communication equipment; and
(e) an allocation of the activated transmitting device and/or receiving device to one of the transmitting antennas and/or receiving antennas is ascertained in dependence on the evaluated signal or noise level.

2. Process according to claim 1, wherein the steps (b)-(e) are repeated for each transmitting device and/or receiving device.

3. Process according to claim 1 or 2, wherein a predetermined transmitting device is activated which as a result produces a transmission signal; wherein a power detector is allocated to each transmitting antenna and can measure the power of the transmission signal; and wherein, when a given power detector detects a predetermined transmission power, an allocation to the activated transmitting device, of the transmitting antenna to which this power detector is allocated, is detected.

4. Process according to claim 3, wherein the measurement results of the power detectors are interrogated simultaneously or in time sequence.

5. Process according to claim 3 or 4, wherein each transmitting antenna is allocated to a group of transmitting devices.

6. Process according to claim 1 or 2, wherein a receiving device is allocated to each transmitting device; wherein a predetermined transmitting device is activated, which emits a transmission signal with a predetermined frequency; wherein the receiving devices measure the signal level of the emitted transmission signal; and wherein the allocation of the activated transmitting device to one of the receiving antennas can be determined from the measured signal levels.

7. Process according to claim 6, wherein several transmitting devices are allocated in groups to each transmitting antenna, and wherein the activated transmitting device can be allocated in dependence on the signal levels of a group of transmitting devices and receiving devices and also on the transmitting antenna allocated to this group.

8. Process according to claim 6 or 7, wherein the transmitting devices can be switched back and forth between two different transmitting frequencies.

9. Process according to one of claims 1-8, wherein at least one controllable amplifying device and at least one receiving device is allocated to each receiving antenna; wherein the controllable amplifying devices are switched on and off for a predetermined period of time; wherein a signal level or noise level is measured in each receiving device with the amplifying device switched on and switched off; wherein the difference between the measured signal levels or noise levels with the amplifying device switched on and switched off is determined; and wherein the allocation of each receiving device to one of the receiving antennas is determined in dependence on the determined difference values.

10. Process according to claim 9, wherein test signals with different frequencies are used, and are radiated one after another; or wherein the controllable amplifying devices are switched on and off in a sequence defined in time.

11. Apparatus for the automatic detection of the allocation of at least one transmitting device and/or receiving device to a transmitting antenna and/or receiving antenna of a radio communication equipment, which has at least one transmitting antenna and/or receiving antenna (70₁, 70₂..70ₙ; 75₁, 75₂..75ₙ), to which is allocated at least one transmitting device and/or receiving device (1, 2..m₁, 1, 2..m₂, 1, 2..mₙ), wherein there is allocated to each transmitting device and/or receiving device a detector (1, 2..m₁, 1, 2..m₂, 1, 2..mₙ; 50₁, 50₂..50ₙ) for sensing a predetermined signal level or noise level in the signal fed into the radio communication equipment; wherein the apparatus has
a control device (10) for the activation of a transmitting device and/or receiving device (1, 2..m₁, 1, 2..m₂, 1, 2..mₙ; 50₁, 50₂, 50ₙ), and also
an evaluation device (10) connected to the detectors (1, 2..m₁, 1, 2..m₂, 1, 2..mₙ; 50₁, 50₂..50ₙ) for the determination of the allocation of the activated transmitting device and/or receiving device to one of the sending antennas and/or transmitting antennas from the evaluated signal level or noise level.

12. Apparatus according to claim 11, wherein a detector (50₁, 50₂..50ₙ) for the measurement of the signal power is allocated to each transmitting device; wherein the control device (10) is constituted for the activation of a transmitting device, which produces a signal in response thereto.

13. Apparatus according to claim 12, wherein a combiner (30₁, 30₂..30ₙ) is allocated to each transmitting antenna (70₁, 70₂..70ₙ); wherein each combiner is connected on the input side to several transmitting devices and on the output side via a transmitting bandpass (40₁, 40₂..40ₙ) to the respective transmitting antenna.

14. Apparatus according to claim 13, wherein a detector (50₁, 50₂..50ₙ) for the measurement of the transmission power is allocated to each transmitting bypass (40₁, 40₂..40ₙ).

15. Apparatus according to claim 11, wherein the control device (10) is constituted for the activation of a transmitting device which on response thereto provides a signal; wherein a combiner (30₁, 30₂..30ₙ) is allocated to each transmitting antenna (70₁, 70₂..70ₙ), and is connected on the input side with several transmitting devices and receiving devices, wherein the receiving devices are constituted for the sensing of the signal level of the signal prepared by the activated transmitting device.

16. Apparatus according to claim 11, wherein each receiving antenna (75₁, 75₂..75ₙ) is connected to at least one amplifying device (90₁, 90₂..90ₙ) controllable by the control device (10), wherein each amplifying device is connected to at least one receiving device, which is constituted for the measurement of a receiving level.
